# EUROPEAN PATENT SPECIFICATION

(11) **EP 4 375 140 B1**
(45) Date of publication and mention of the grant of the patent: **28.05.2025**
(21) Application number: 22209027.6
(22) Date of filing: 23.11.2022
(51) Int. Cl.: B60Q 1/50, B60Q 1/30, B60Q 1/26, B60Q 1/00, F21S 43/15, F21S 43/19, F21S 43/31, F21S 43/14

(54) **REAR LIGHT DEVICE OF A RACING CAR AND RELATED RACING CAR**
RÜCKLICHTVORRICHTUNG EINES RENNFAHRZEUGS UND ZUGEHÖRIGES RENNFAHRZEUG
DISPOSITIF DE FEU ARRIÈRE D'UN VÉHICULE DE COURSE ET VÉHICULE DE COURSE ASSOCIÉ

(43) Date of publication of application: 29.05.2024
(73) Proprietor: Marelli Automotive Lighting Italy S.p.A. Con Socio Unico, 10078 Venaria Reale (TO) (IT)
(72) Inventor: IANNACONE, Federico, 33028 Tolmezzo (UD) (IT); MONTI, Desiree, 33028 Tolmezzo (UD) (IT); SACCÀ, Alessandro, 33028 Tolmezzo (UD) (IT)
(74) Representative: Novagraaf Group

(56) References cited:
- EP-B1- 3 351 850
- DE-A1- 102011 076 330
- JP-A- 2019 001 398
- JP-A- 2019 034 640
- KR-A- 20140 079 932
- US-A1- 2013 114 280
- US-A1- 2016 067 597
- US-A1- 2017 305 332
- US-A1- 2022 219 601

## Description

### TECHNICAL FIELD

This invention concerns a rear light device for a racing car.

More specifically, this invention relates to a rear light device of a single-seat car, preferably with open wheels for track racing, to which the description that follows will make explicit reference without any loss of generality thereby.

### PRIOR ART

As is known, single-seat racing cars used in Grand Prix racing, for example Formula 1, are provided with a rear light device that is activated to improve the visibility of cars by drivers on the track.

The rear light device used in racing cars is currently provided with a series of light-emitting diodes, or LEDs, which are arranged beside each other so as to form a series of vertical LED columns side by side.

In use, when there is reduced visibility, such as, for example, if it is raining or there is fog, all the LEDs of the rear light device are switched on at the same time in order to signal the position of the car to the other drivers.

Although effective in performing the function described above, the operation of the taillight devices of racing cars described above is not completely satisfactory.

Solutions disclosed in US 2016/067597 A1, US 2017/305332 A1, JP 2019 034640 A, JP 2019 001398 A, KR 2014 0079932A, DE 10 2011 076330 A1, and US 2022/219601 A1 are also known.

### DESCRIPTION OF THE INVENTION

The purpose of this invention is, thus, to provide a rear light device for racing cars, which is improved compared to the known solutions, and ensures more information for drivers if needed.

According to this invention, a rear light device including an electronic control system is produced for a racing car and comprises the technical features of claim 1.

Said electronic control system preferably comprises memory means designed to store multiple images, the electronic control system being configured so as to: receive in input a control signal associated with at least one image to be displayed via said rear light device, to search an image among the images stored in said memory means based on said control signal, to control the display device so as to display said image.

The electronic control system is preferably also configured so as to control the mini-LEDs and/or the micro-LEDs of the electronic matrix of said display device to generate an image containing, as desired, at least: one message and/or one symbol and/or one pictogram.

Said electronic control system is also preferably configured so as to control the mini-LEDs and/or micro-LEDs of the electronic matrix of said display device to display an image indicating the state of the race.

Said electronic control system is also preferably configured so as to control the mini-LEDs and/or micro-LEDs of the electronic matrix of said display device to display an image indicating a hazard.

Said electronic control system is also preferably configured so as to control the mini-LEDs and/or micro-LEDs of the electronic matrix of the display device to display an image indicating a condition of said racing car during the race.

Said mini-LED electronic matrix and/or said micro-LED electronic matrix of the mini-LED display preferably has a flat square shape.

The LEDs of said LED light device are preferably arranged one beside the other on a plane so as to form a rectangular LED frame.

The LEDs of said LED light device are preferably arranged so as to form vertical rows/lines.

The LEDs of said LED light device are preferably arranged so as to form horizontal rows/lines.

The LEDs of said LED light device are arranged at the vertices of the LED light device.

According to the invention, said rectangular LED frame surrounds said mini-LED electronic matrix or said micro-LED electronic matrix.

The electronic control system is preferably configured so as to: receive an incoming control signal indicating that there is fog or rain, to control the LED light device so as to generate, along said external frame, a homogeneous signal light having a first light intensity, to control the display device so as to generate, in the area delimited by said external frame, an image having a second light intensity that is less than the first light intensity.

According to the invention, the rear light device comprises: a housing, a lenticular body that is coupled to the housing, a printed circuit board that is arranged inside said housing; said mini-LED electronic matrix or said micro-LED electronic matrix being arranged on said printed circuit board facing said lenticular body.

The LEDs of said LED lighting structure are arranged so as to externally surround said mini-LED electronic matrix or said micro-LED electronic matrix.

The LEDs of said LED lighting structure are arranged on a second surface of said electronic board opposite said lenticular body and are optically coupled to light guide plates structured to guide the light of said LEDs towards said lenticular body.

According to this invention, a racing car provided with a rear light device produced according to what is described above is also provided.

### BRIEF DESCRIPTION OF THE DRAWINGS

This invention will now be described with reference to the attached drawings that illustrate a non-limiting embodiment thereof, in which:
Figure 1 is a rear view of a racing car provided with a rear light device made according to the present invention,
Figure 2 is a block diagram of the rear light device made according to the present invention,
Figure 3 is an exploded perspective view of the rear light device made according to an example not being part of the present invention,
Figure 4 is a schematic exploded view in cross-section of the rear light device produced according to an example not being part of the present invention,
Figure 5 is a schematic view in front elevation of the rear light device made according to an example not being part of the present invention,
Figure 6 is a schematic cross-section of the rear light device made according to a possible example not being part of the present invention,
Figure 7 is a schematic cross-section of the rear light device made according to another possible example not being part of the present invention,
Figure 8 is a schematic cross-section of the rear light device made according to an embodiment of the present invention,

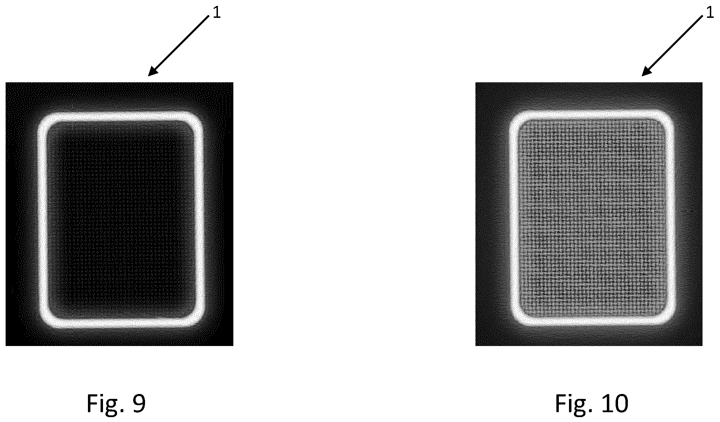

Figures 9 and 10 show an example of the operation of the rear light device made according to an embodiment of the present invention,
Figures 11 to 14 show as many other examples of images generated by the rear light device made according to the present invention.

### PREFERRED EMBODIMENTS OF THE INVENTION

The present invention will now be described in detail with reference to the accompanying drawings in order to allow a skilled person to implement it and use it.

Various modifications to the embodiments described will be immediately clear to persons skilled in the art and the generic principles described may be applied to other embodiments and applications without, for this reason, departing from the protective scope of this invention, as defined in the attached claims.

Therefore, this invention is not limited to the embodiments described and illustrated but it should be granted the widest protective scope compliant with the claims.

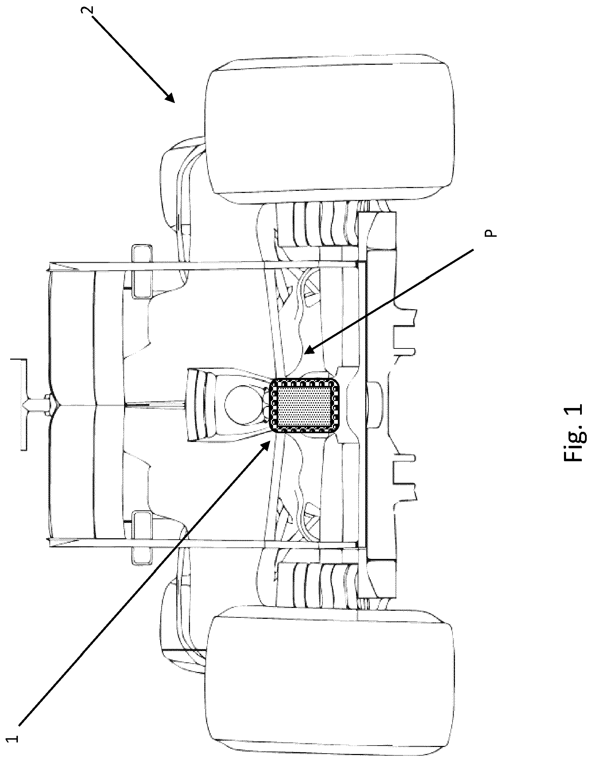

With reference to Figure 1, the reference number 1 schematically illustrates, as a whole, a rear light device of a racing/competition car.

In the embodiment illustrated in Figure 1, the rear lighting device 1 is structured to be mounted on a racing/competition car 2. In the example illustrated, the racing/competition car 2 preferably corresponds to a single-seat, open-wheel vehicle. In the example illustrated, the rear light device 1 is mounted centrally in the rear part P of the car 2.

The single-seat, open-wheel vehicle is preferably designed to be used to do races on circuits/closed tracks. The single-seat, open-wheel vehicle is preferably structured for Gran Prix car racing. Gran Prix car racing may comprise, for example: Formula 1, Formula 2, Formula Indy, Formula E Gran Prix, or any other similar Gran Prix racing.

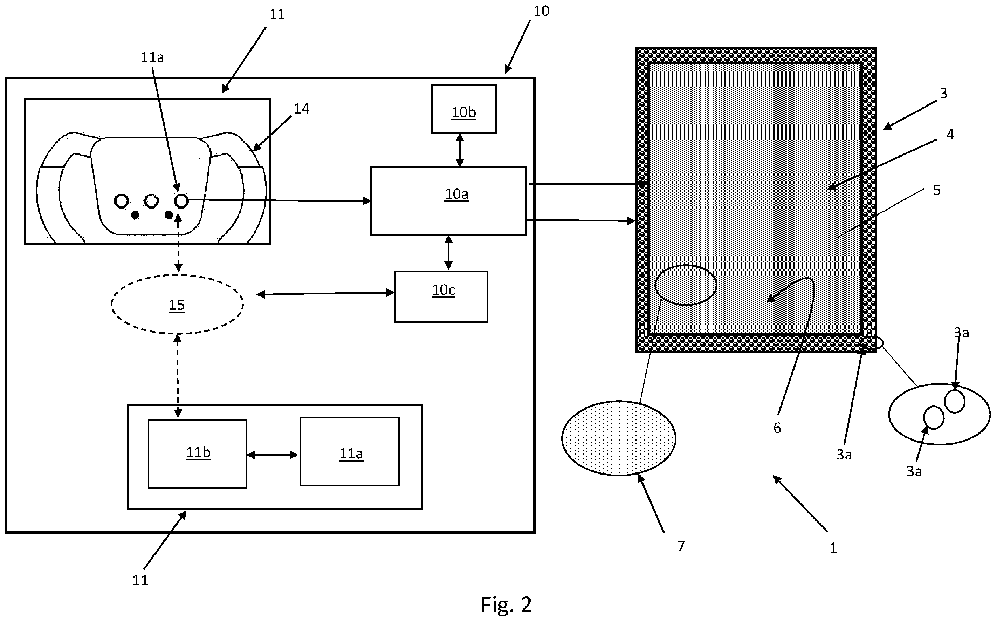

With reference to Figures 1 and 2, the rear light device 1 is provided with an LED light device 3 comprising a lighting structure provided with a plurality of light-emitting diodes, i.e., LEDs 3a.

The rear light device 1 is also provided with a mini-LED display 4. In the example illustrated, the mini-LED display 4 comprising a mini-LED electronic matrix 5.

The mini-LED electronic matrix 5 comprises a plurality of mini-LEDs 7. The mini-LED electronic matrix 5 has a face 6 on which there are mini-LEDs placed side by side. The mini-LEDs 7 of the mini-LED electronic matrix 5 are arranged on the face 6 so as to form a light-emitting surface. The light-emitting surface of the mini-LED display 4 formed by (consisting of) mini-LEDs 7 is conveniently homogeneous and continuous over the whole area occupied by the mini-LEDs 7.

The mini-LEDs 7 may preferably have a constant pitch across the whole area and are arranged on the face 6 side by side, preferably according to a matrix configuration formed by rows and columns.

With reference to the attached drawings, the mini-LED electronic matrix 5 is arranged in a position immediately adjacent to the LEDs 3a of the LED light device 3.

With reference to Figure 2, the rear light device 1 comprises, in addition, an electronic control system 10 configured to selectively drive the LED light device 3 and the mini-LED display 4.

According to a preferred embodiment, the electronic control system 10 is configured to control the LEDs 3a of the LED light device 3 in order to perform a photometric lighting function in which it emits/generates a signal light. The signal light associated with the photometric lighting function is conveniently designed to signal the presence of the racing car 2 to the drivers of other racing cars, generally the drivers of the racing cars positioned behind the racing car 2.

The signal light is designed to signal the presence of the car 2 and is, preferably, generated via the LED light device 3 when there is reduced visibility, such as, for example, if there is rain or fog, or similar conditions.

The electronic control system 10 is also configured in order to control the LEDs 3a of the LED light device 3 to generate the signal light with a first, predetermined light intensity. The first, predetermined light intensity may be, for example, greater or equal to approximately 800 cd (candelas).

The electronic control system 10 is also preferably configured to control the LEDs 3a of the LED light device 3 intermittently.

The electronic control system 10 is also preferably configured to vary the intermittent frequency of the LEDs 3a of the LED light device 3.

The electronic control system 10 is also preferably configured in order to vary the intermittent frequency of the LEDs 3a of the LED light device 3 based on the condition to be signalled.

The electronic control system 10 is also preferably configured to control LEDs 3a according to an intermittent mode when energy harvesting is carried out, to communicate to the cars that follow the car 2 a warning that the car is slowing down. For example, when energy harvesting is carried out, the electronic control system 10 may control switching on the LEDs 3a intermittently with a frequency, conveniently, of approximately 2 Hz.

The electronic control system 10 is also preferably configured to control LEDs 3a according to an intermittent mode when it is raining or there is reduced/limited visibility. For example, when it is raining or visibility is limited, the electronic control system 10 may control switching on the LEDs 3a intermittently with a frequency, conveniently, of approximately 4 Hz.

The electronic control system 10 is also preferably configured to control LEDs 3a according to an intermittent mode when a safety car or virtual safety car enters or is present on the track. For example, when a safety car or virtual safety car enters or is present on the track, the electronic control system 10 may control switching on the LEDs 3a intermittently with a frequency of 2 Hz for a predetermined interval, for example 10 seconds.

The electronic control system 10 is also configured so as to control LEDs 3a according to an intermittent mode when there is a pit lane. For example, when there is a pit lane, the electronic control system 10 may control switching on the LEDs 3a intermittently with a frequency of 2 Hz.

According to a preferred embodiment of this invention, the electronic control system 10 is also configured so as to selectively control the mini-LEDs 7 of the mini-LED electronic matrix 5 of the mini-LED display 4.

The electronic control system 10 is configured in order to selectively control the mini-LEDs 7 of the mini-LED electronic matrix 5 to perform one or more communication lighting functions. The communication lighting functions performed by the mini-LED display 4 are preferably different to the photometric function performed by the LED light device 3.

The communication lighting functions performed by the mini-LED display 4 preferably provide lighting information via the representation of images/light signs of various kinds, i.e., in graphic, numeric, or alphabetic form.

The images associated with the communication lighting functions generated by the mini-LED display 4 may comprise, for example, pictograms and/or symbols and/or messages.

The images associated with the communication lighting functions generated by the mini-LED display 4 of the rear light device 1 may be static (fixed) and/or dynamic (animated images and/or moving images) generated by the mini-LED display 4 of the device.

The images associated with the communication lighting functions generated by the mini-LED display 4 may, conveniently, be observed/displayed on the outside of the car 2, for example by the drivers of the other cars that are facing the tail end of the car 2.

According to a preferred embodiment, the electronic control system 10 is configured so as to selectively control the mini-LEDs 7 of the mini-LED electronic matrix 5 of the mini-LED display 4 during the generation of the images so that the overall intensity of the light is less than a second, predetermined light intensity. The second, predetermined light intensity is preferably less than the first, predetermined light intensity. The second, predetermined light intensity may be, for example, less than or equal to approximately 150 cd (candelas).

According to a preferred embodiment shown in Figure 2, the electronic control system 10 may comprise a processing and control unit 10a and a memory unit 10b.

The processing and control unit 10a may comprise, for example, a micro-processor or similar electronic devices. The processing and control unit 10a may be configured in order to receive in input a control signals and selectively controls the LED light device 3 and the mini-LED display 4 based on the received control signals. The control signals may be indicative of a control to perform a photometric lighting function or a control for performing a communication lighting function.

According to a possible embodiment, the memory unit 10b may store multiple predetermined images associated with corresponding communication lighting functions.

According to one possible embodiment, the processing and control unit 10a may be configured so as to: receive in input a control signal indicative of a communication lighting function, search, in the memory unit 10b, an image among the predetermined images stored corresponding to the communication lighting function, based on said control signal, selectively control the mini-LEDs 7 of the mini-LED electronic matrix 5 of the mini-LED display 4 to display the image found in the memory unit 10b.

The electronic control system 10 may also comprise at least one electronic user control device 11, which is configured so as to enable the user to impart controls relating to the photometric and/or communication lighting function to be carried out to the rear light device 1, and provides, based on the user-controls imparted, control signals to the processing and control unit 10a.

According to the example shown in Figure 2, the electronic user control device 11 may comprise control devices 11a. The control devices 11a may be arranged inside the passenger compartment of the car 2. Conveniently, the control devices 11a of the electronic user control device 11 may be comprised (integrated), for example, in the steering wheel 14 of the car 2. The control devices 11a may comprise selectors and/or a control panel.

The control devices 11a may be electrically connected to the processing and control unit 10a and/or may communicate with the latter via a wireless communication system 15 operating in radio frequency (wireless system) so as to provide it with control signals by means of a communication unit 10c included in the electronic control system 10.

According to the example shown in Figure 2, an electronic user control device 11 may be outside the passenger compartment of the car 2. For example, the electronic user control device 11 may comprise, alternatively and/or in addition, a remote computing unit 11b external to the car 2. The computing unit 11b of the electronic user control device 11 may comprise a personal computer, laptop, notebook (or any other similar computing electronic device), which, based on controls imparted by the user is designed to communicate control signals to the processing and control unit 10a through, for example, the communication system 15 by means of a communication module 11b.

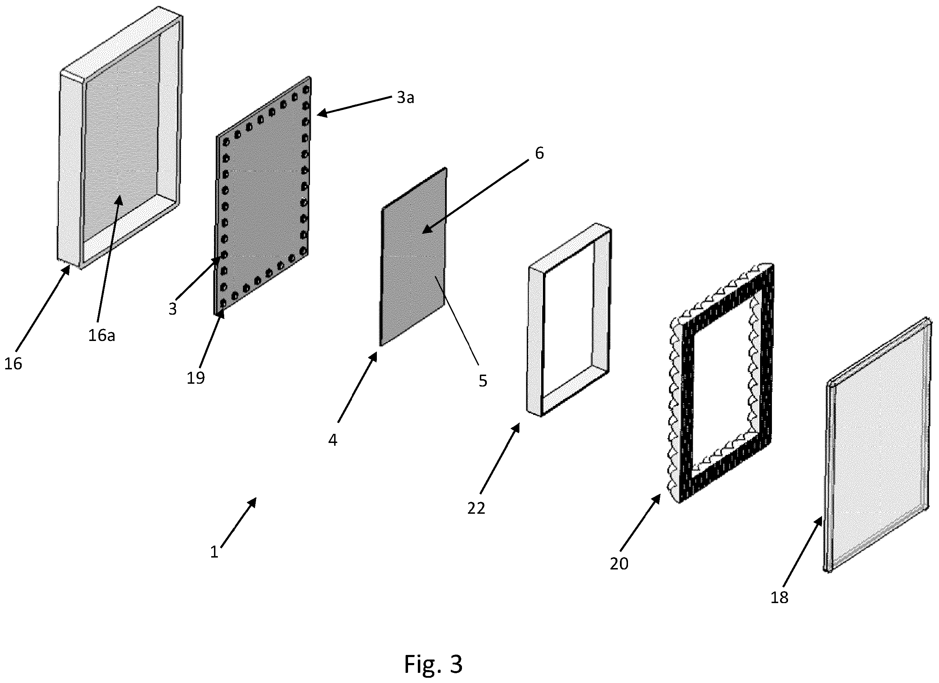

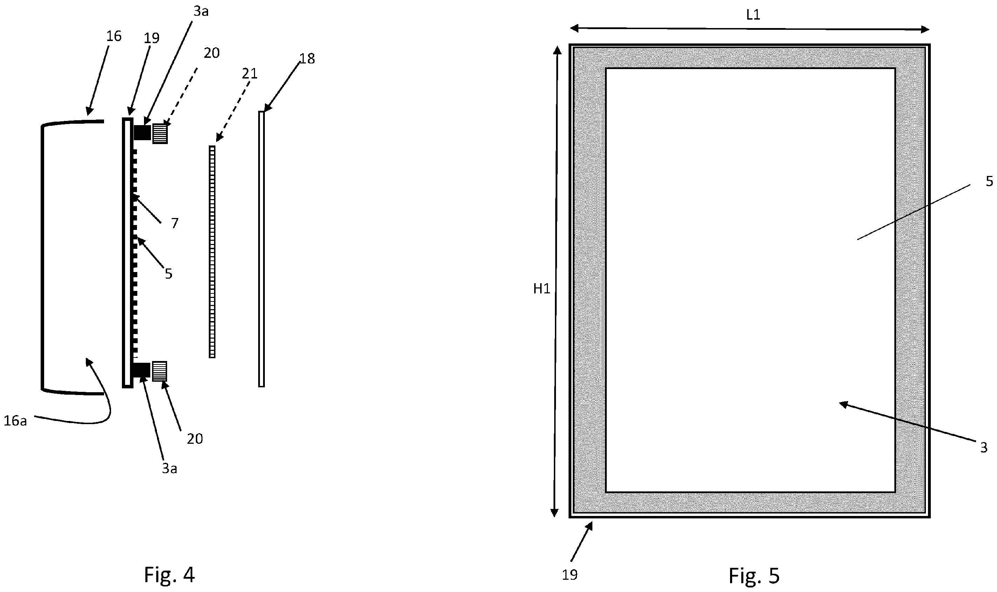

According to a possible example not being part of the invention and shown in Figures 3 and 4, the rear light device 1 may comprise: a housing body 16, a lenticular body 18, which is firmly coupled to the housing 16, and a printed circuit board 19, which is arranged inside the housing 16.

In the example illustrated in Figure 3, the housing body 16 is shaped so as to form a rectangular body, for example a rear one. The housing 16 may preferably, but not necessarily, be cup-shaped. The housing 16 may comprise a cavity or internal seat 16a. The internal seat 16a may have an opening or mouth.

It remains understood that according to this example, the housing body 16 may have any shape and may be structured to be mechanically and firmly connected with the rear end P of the car 2.

The lenticular body 18 may be arranged in the rear light device 1 in a front position. The lenticular body 18 may define the external face of the rear light device 1.

As shown in the embodiment example in Figure 3, the face of the lenticular body 18 is positioned/turned towards the space outside the rear light device 1 and has an inner face turned towards the seat 16a. For example, the lenticular body 18 may be shaped like a plate-shaped half-bearing. The lenticular body 18 may be, at least partially, two-dimensional, for example rectangular and extend/lie across a flat (almost level) surface. The lenticular body 18 may be made, for example, completely and/or at least partially of transparent or semi-transparent or translucid material. The lenticular body 18 may be made so that the light emitted by its outer face is a red-coloured light. The lenticular body 18 may be an external lens.

According to a possible embodiment, the electronic board 19 may be shaped so as to have a basically rectangular shape and is sized so as to be housed in the seat 16a.

As shown in Figures 2 and 3, the LEDs 3a are preferably arranged next to each other on the surface 19a of the electronic board 19 facing the inner face of the lenticular body 18 and are positioned along one or more side edges of the electronic board 19.

According to a possible example not being part of the invention and shown in Figures 2 and 4, the mini-LED electronic matrix 5 is arranged immediately next to the LEDs 3a and has the mini-LEDs 7 adjacent to the inner face of the lenticular body 18.

According to the example shown in Figures 2 and 4, the LEDs 3a are preferably arranged next to each other along the outer edge of the electronic board 19 so as to form/generate, when switched on, an illuminating rectangular outer frame.

The LEDs 3a that form the illuminating rectangular outer frame delimit on the electronic board 19 an inner rectangular portion on which the mini-LED electronic matrix 5 is arranged. In the example illustrated, the mini-LEDs 7 of the mini-LED electronic matrix 5 are arranged on the electronic board 19 next to each other so as to completely occupy the inner rectangular portion. In other words, in the example illustrated, the mini-LED electronic matrix 5 has a rectangular shape corresponding to the inner rectangular portion. In the example illustrated, the mini-LED electronic matrix 5 is arranged on the electronic board 19 so that the mini-LED display faces the lenticular body 18. In the example illustrated, the LEDs 3a are preferably arranged on the electronic board 19 so as to externally surround the mini-LED electronic matrix 5.

It remains understood that this invention is not limited to a configuration that involves an arrangement of the LEDs 3a along the outer edge of the electronic board 19 so as to form an illuminating rectangular outer frame, and the positioning of the mini-LED electronic matrix 5 in the inner rectangular portion surrounded by the illuminating rectangular outer frame, but may involve other solutions according to the claims. For example, according to an embodiment not illustrated, the LEDs 3a may be arranged next to each other so as to form at least one individual vertical and/or horizontal straight luminous segment that extends, for example, along a side edge of the electronic board 19, while the mini-LED electronic matrix 5 may be arranged adjacent to and next to the individual straight luminous segment.

With reference to Figure 3, conveniently, the rear light device 1 may also comprise a frame 22 preferably with a rectangular shape that is placed between the LED light device 3 and the mini-LED display 4. The frame 22 may comprise a rectangular frame that has walls extending orthogonal to the electronic board and forming partitions made of material that is not transparent to light so as to prevent the light emitted by the LEDs 3a from penetrating the space occupied by the mini-LEDs 7 and vice versa.

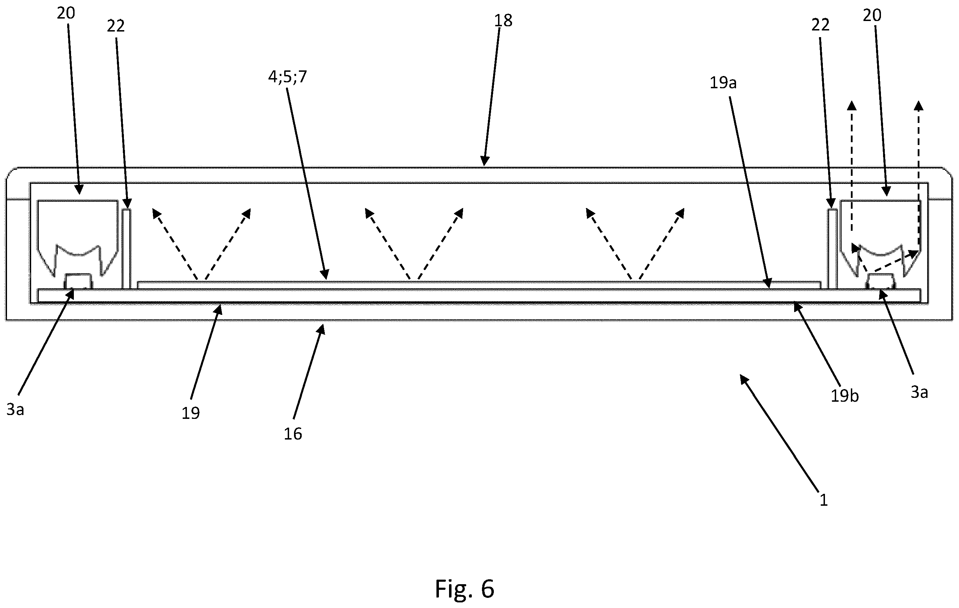

With reference to Figures 4 and 6, the rear light device 1 may comprise, in addition, optical collimators 20. According to the examples shown in Figures 4, 6, and 7, the optical collimators 20 are placed between the LEDs 3a and the lenticular body 18, and are structured so as to collimate the light emitted by each LED 3a towards a related outer edge of the lenticular body 18.

In the example shown in Figures 3 and 6, the optical collimators 20 are formed by a rectangular optical frame that is inserted outside the frame 22 arranged between the LEDs 3a and the inner face of the lenticular body 18.

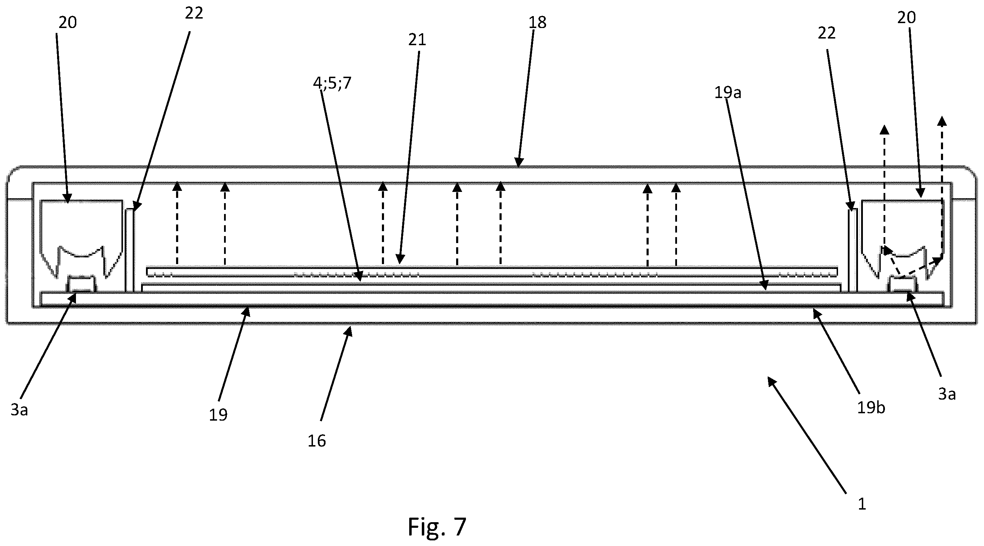

As shown in Figures 4 and 7, the rear light device 1 may comprise, in addition, optical collimators 21, which are placed between the mini-LEDs 3a and the lenticular body 18 and are structured so as to collimate the light emitted by each mini-LED 7 towards the lenticular body 18. For example, the optical collimators 21 may comprise a rectangular plate-shaped element placed between the mini-LED electronic matrix 5 and the inner face of the lenticular body 18.

The use of the optical collimators 21 has the technical effect of increasing the optical performance of the mini-LED electronic matrix 5 in order to provide a significant contribution to the photometry of the signalling function (for example fog-lights or rain-lights). The Applicant has found that this use conveniently makes it possible to reduce the optical and electrical power required by the LED light device 3 and, at the same time, increases the visibility of the images (pictograms) including in conditions of low environmental visibility, or in adverse environmental conditions.

In particular, the use of optical collimators 21 has the technical effect of increasing the optical performance of the mini-LED display within a defined portion of the visual field.

According to one embodiment, the electronic control circuit 10 is configured so as to: receive from the electronic user control device 11 a control signal indicating a user control associated with the photometric lighting function and, based on the control signal received, it switches on the LEDs 3a. With reference to the example shown in Figure 5, the LEDs 3a that are switched on form the luminous rectangular frame.

As shown in the example of Figure 5, the luminous rectangular frame of the rear light device 1 may, preferably, have an outer width L1 of approximately 90 mm, an inner width L2 of approximately 80 mm, an outer height H1 of approximately 118 mm, and an inner height H2 of approximately 108 mm.

The electronic control circuit 10 may be configured so as to keep the LEDs 3a switched on continuously, when the light signal relating to the photometric lighting function is activated based on the control. The user control for activating the photometric lighting function may be imparted by the user, for example, when there is reduced visibility, for example when there is fog or rain, or in other, similar environmental conditions in which the drivers' ability to see the track is reduced.

Alternatively, or in addition, the electronic control circuit 10 may also be configured so as to switch on the LEDs 3a discontinuously, or intermittently.

According to one embodiment, the electronic control circuit 10 is configured so as to receive from the electronic user control device 11 a control signal indicating a user control associated with the communication lighting function and, based on the control signal received, it controls the mini-LEDs 7 to generate an image via the mini-LED device 4.

The electronic control circuit 10 may also preferably be configured so as to search in the memory unit 10b, an image among the images stored based on the control signal, and it controls the mini-LEDs 7 to generate, via the mini-LED device 41, the image found and taken from the memory unit.

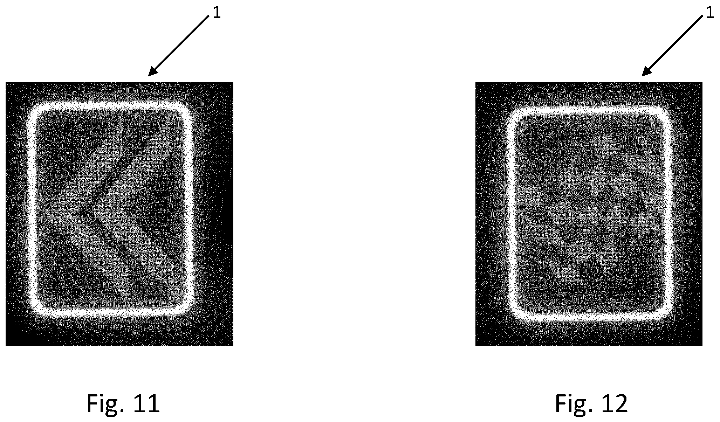

The electronic control circuit 10 may also be configured so as to control the mini-LEDs 7 of the mini-LED display 4 so as to display an image that communicates a race condition. An image displayed via the mini-LED electronic matrix 5 to represent the condition of the race may contain, for example, an end-of-race message and/or symbol, for example depicting the chequered flag (Figure 12).

The electronic control circuit 10 may also be configured so as to control the mini-LEDs 7 of the mini-LED electronic matrix 5 so as to display, via the mini-LED device 4, an image that communicates a dangerous conditions. The image of the dangerous conditions may contain, for example, a warning message, or a symbol depicting, for example, a warning signal. As shown in the example of Figure 11, a pictogram of the image could communicate a warning message indicating the intention of the driver of the car 2 to externally signal the near execution of a manoeuvre to enter the pit lane towards the boxes or, vice versa, an exit manoeuvre, or a partial interruption of the race, for example during a pit stop and/or in the event of the slowing down or grouping of vehicles via the safety car or pace car.

The electronic control circuit 10 may also be configured in order to control the mini-LEDs 7 of the mini-LED electronic matrix 5 so as to display, via the mini-LED device 4, an image that communicates a vehicle condition.

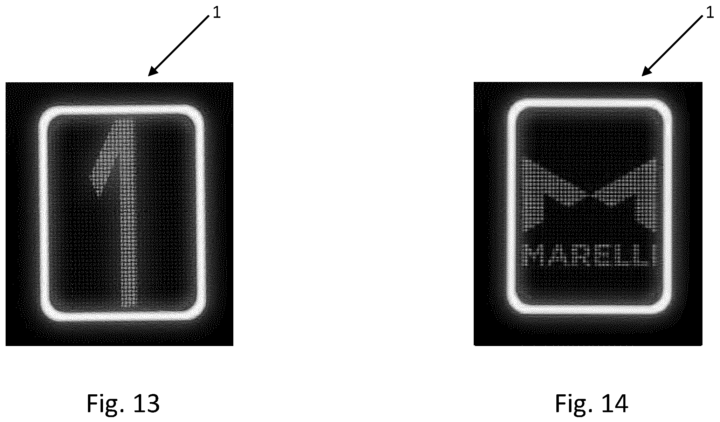

The image of the vehicle condition may contain, for example, a message relating a characteristic of the vehicle, for example its number, and/or the brand/logo, or the like (Figures 13 and 14).

The operation method of the rear light device described above essentially involves controlling, via the electronic control system 10, the LEDs 3a of the LED light device so as to perform a photometric lighting function in which it emits a signal light to signal the presence of the racing car 2 to the drivers of other racing cars, and/or to control, via the electronic control system 10, the mini-LEDs 7 of the mini-LED display 4 to perform a communication lighting function in which it displays an image.

In particular, the method comprises the step of storing a plurality of images in the memory unit 10b of the electronic control system 10, receiving, via the electronic control system 10, a control signal indicating at least one image to be displayed via the rear light device 1, finding, in the memory unit 10b, an image among the images stored, based on said control signal, controlling, via the electronic control system 10, the mini-LEDs 7 of the mini-LED display 4, so as to display the image selected.

The advantages of the rear light device 1 are clear.

The rear light device advantageously enables performing, in addition to the photometric lighting function, for example, an anti-fog and/or anti-rain lighting function, including communication lighting functions towards the outside and, in particular, directed to the other drivers, increasing, thus, the exchange of information and/or signals among the same, and increasing safety.

In particular, this invention is advantageous since the lighting device, thanks to the architecture described above, is able to carry out, in addition to the conventional lighting signals obtained via the LEDs, the display of images as well, something that cannot be implemented using known devices.

It remains understood that this invention is not limited to a rear light device 1 provided with a mini-LED display 4.

According to another embodiment, the rear light device (not illustrated) differs from that described above due to the fact that the mini-LED display 4 is replaced by a micro-LED display. According to this embodiment, the micro-LED display comprises a micro-LED matrix provided, in turn, with multiple micro-LEDs. The micro-LEDs are, thus, arranged on the electronic board 19 and are activated to perform the communication lighting functions.

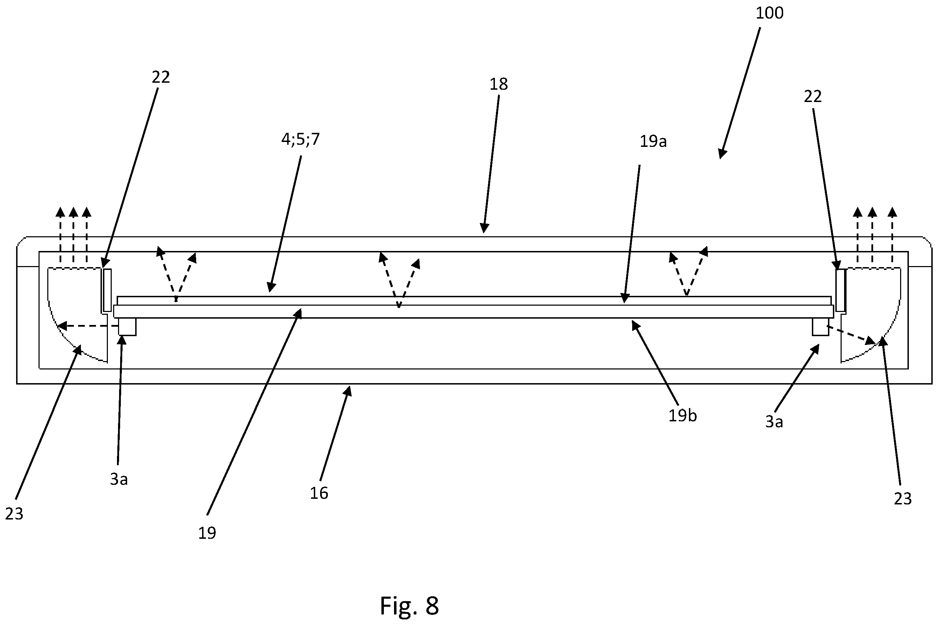

The embodiment of the invention shown in Figure 8 relates to a rear light device 100, which is similar to the rear light device 1 shown in Figures 6 and 7, and whose component parts will be identified, where possible, with the same reference numbers that identify corresponding parts of the rear light device 1.

The rear light device 100 shown in Figure 8 differs from the rear light device 1 shown in Figures 6 and 7 due to the fact that the LEDs 3a are arranged on the surface 19b of the electronic board 19 opposite the surface 19a.

According to the embodiment shown in Figure 8, the rear light device 100 comprises a plurality of LEDs 3a that are arranged on the surface 19b at the rectangular outer edge of the electronic board 19 and a light guide plate 23 arranged with its inner wall facing the LEDs 3a. In the example illustrated, the light guide plate 23 has the shape of a rectangular frame and is structured so as to deviate the light emitted by the LEDs 3a towards the outer edge of the lenticular body 19 so as to create the illuminating rectangular frame.

The technical effect obtained is that of exploiting both the faces of the electronic board and extending the optical path of the light emitted by the LEDs 3a so as to obtain greater homogeneity of the light generated during the execution of the photometric signalling function.

## Claims

1. A rear light device (1) (100) for a racing car (2) comprising:
an LED light device (3) comprising an LED lighting structure provided with multiple LEDs (3a), and
a display device (4) which consists of a mini-LED electronic matrix (5) or a micro-LED electronic matrix, and is arranged in a position adjacent to the LEDs (3a) of said LED light device (3),
an electronic control system (10) configured to selectively control:
said LED light device (3) to emit, by said LEDs (3a) a signal light to signal the presence of said car (2) to the drivers of other racing cars, and/or
- said display device (4) to display at least one image, the rear light device comprising:
a housing body (16)
a lenticular body (18) that is coupled to the housing body (16)
an electronic board (19) that is arranged inside said housing body (16),
said mini-LED electronic matrix (5) or said micro-LED electronic matrix being arranged on said electronic board (19) facing said lenticular body (18)
wherein the LEDs (3a) of said LED lighting structure are arranged on said electronic board (19) in order to externally surround said mini-LED electronic matrix or said micro-LED electronic matrix,
**characterized in that** the LEDs (3a) of said LED lighting structure are arranged on a second surface of said electronic board (19) opposite said lenticular body (18) and are optically coupled to light guide plates (23) structured to guide the light of said LEDs (3a) towards said lenticular body (18).

2. The rear light device according to claim 1, wherein said electronic control system (10) comprises memory means (10b) designed to store a plurality of images,
said electronic control system (10) being configured in order to:
receive in input a control signal associated with at least one image to be displayed via said rear light device,
search an image among the stored images in said memory means (10b) based on said control signal,
control the display device (4) in order to display said image.

3. The rear light device according to claim 1 or 2, wherein said electronic control system (10) is also configured in order to control the mini-LEDs (7) and/or the micro-LEDs of the electronic matrix of said display device (4) to generate an image containing at least: one message and/or one symbol and/or one pictogram.

4. The rear light device according any of the previous claims, wherein said electronic control system (10) is also configured in order to control the mini-LEDs (7) and/or micro-LEDs of the electronic matrix of said display device (4) to display an image indicative of a race condition.

5. The rear light device according to any of the previous claims, wherein said electronic control system is also configured in order to control the mini-LEDs and/or micro-LEDs of the electronic matrix of said display device (4) to display an image indicative of a dangerous condition.

6. The rear light device according any of the previous claims, wherein said electronic control system is also configured so as to control the mini-LEDs (7) and/or micro-LEDs of the electronic matrix of the display device (4) to display a third image indicative of a racing condition of said racing car (2) during the race.

7. The rear light device according to any of the previous claims, wherein said mini-LED electronic matrix (5) and/or said micro-LED electronic matrix of the mini-LED display (4) has a flat rectangular shape.

8. The rear light device according to any of the previous claims, wherein the LEDs (3a) of said LED light device (3) are arranged side by side on a plane so as to form a rectangular LED frame.

9. The rear light device according to claim 8, wherein said rectangular LED frame surrounds said mini-LED electronic matrix or said micro-LED electronic matrix.

10. The rear light device according to claim 9, wherein said electronic control system (10) is configured in order to:
receive in input a control signal indicative of fog condition or rain condition,
control the LED light device (3) in order to generate along said external frame a homogeneous signal light having a first light intensity,
control the display device (4) in order to generate in the area delimited by said external frame, an image having a second light intensity that is less than the first light intensity.

11. A racing car provided with a rear light device made according to any of the claims from 1 to 10.

## Patentansprüche

1. Rücklichtvorrichtung (1) (100) für einen Rennwagen (2), umfassend:
eine LED-Lichtvorrichtung (3), umfassend eine LED-Beleuchtungsstruktur, die mit mehreren LEDs (3a) versehen ist, und
eine Anzeigevorrichtung (4), die aus einer elektronischen Mini-LED-Matrix (5) oder einer elektronischen Mikro-LED-Matrix besteht und in einer Position angrenzend an die LEDs (3a) der LED-Leuchtvorrichtung (3) angeordnet ist,
ein elektronisches Steuersystem (10), das konfiguriert ist, um selektiv zu steuern:
die LED-Lichtvorrichtung (3), um durch die LEDs (3a) ein Signallicht auszusenden, um den Fahrern anderer Rennwagen die Anwesenheit des Wagens (2) zu signalisieren, und/oder
- die Anzeigevorrichtung (4), um mindestens ein Bild anzuzeigen, die Rücklichtvorrichtung umfassend:
einen Gehäusekörper (16)
einen linsenförmigen Körper (18), der mit dem Gehäusekörper (16) gekoppelt ist
eine elektronische Platine (19), die im Inneren des Gehäusekörpers (16) angeordnet ist,
wobei die elektronische Mini-LED-Matrix (5) oder die elektronische Mikro-LED-Matrix auf der elektronischen Platine (19) dem linsenförmigen Körper (18) zugewandt angeordnet ist
wobei die LEDs (3a) der LED-Beleuchtungsstruktur auf der elektronischen Platine (19) angeordnet sind, um die elektronische Mini-LED-Matrix oder die elektronische Mikro-LED-Matrix äußerlich zu umgeben,
**dadurch gekennzeichnet, dass** die LEDs (3a) der LED-Beleuchtungsstruktur auf einer zweiten Oberfläche der elektronischen Platine (19) gegenüber dem linsenförmigen Körper (18) angeordnet und mit Lichtleiterplatten (23) optisch gekoppelt sind, die strukturiert sind, um das Licht der LEDs (3a) in Richtung des linsenförmigen Körpers (18) zu leiten.

2. Rücklichtvorrichtung nach Anspruch 1, wobei das elektronische Steuersystem (10) Speichermittel (10b) umfasst, die ausgelegt sind, um eine Vielzahl von Bildern zu speichern, wobei das elektronische Steuersystem (10) konfiguriert ist zum:
Empfangen an einem Eingang eines Steuersignals, das mit mindestens einem Bild verknüpft ist, das über die Rücklichtvorrichtung anzuzeigen ist,
Suchen eines Bilds unter den gespeicherten Bildern in dem Speichermittel (10b) basierend auf dem Steuersignal,
Steuern der Anzeigevorrichtung (4), um das Bild anzuzeigen.

3. Rücklichtvorrichtung nach Anspruch 1 oder 2, wobei das elektronische Steuersystem (10) ebenso konfiguriert ist, um die Mini-LEDs (7) und/oder die Mikro-LEDs der elektronischen Matrix der Anzeigevorrichtung (4) zu steuern, um ein Bild zu erzeugen, das mindestens eines enthält von: einer Nachricht und/oder einem Symbol und/oder einem Piktogramm.

4. Rücklichtvorrichtung nach einem der vorstehenden Ansprüche, wobei das elektronische Steuersystem (10) ebenso konfiguriert ist, um die Mini-LEDs (7) und/oder die Mikro-LEDs der elektronischen Matrix der Anzeigevorrichtung (4) zu steuern, um ein Bild anzuzeigen, das einen Rennzustand angibt.

5. Rücklichtvorrichtung nach einem der vorstehenden Ansprüche, wobei das elektronische Steuersystem ebenso konfiguriert ist, um die Mini-LEDs und/oder die Mikro-LEDs der elektronischen Matrix der Anzeigevorrichtung (4) zu steuern, um ein Bild anzuzeigen, das einen gefährlichen Zustand angibt.

6. Rücklichtvorrichtung nach einem der vorstehenden Ansprüche, wobei das elektronische Steuersystem ebenso konfiguriert ist, um die Mini-LEDs (7) und/oder die Mikro-LEDs der elektronischen Matrix der Anzeigevorrichtung (4) zu steuern, um ein drittes Bild anzuzeigen, das einen Rennzustand des Rennwagens (2) während des Rennens angibt.

7. Rücklichtvorrichtung nach einem der vorstehenden Ansprüche, wobei die elektronische Mini-LED-Matrix (5) und/oder die elektronische Mikro-LED-Matrix der Mini-LED-Anzeige (4) eine flache rechteckige Form aufweist.

8. Rücklichtvorrichtung nach einem der vorstehenden Ansprüche, wobei die LEDs (3a) der LED-Lichtvorrichtung (3) nebeneinander auf einer Ebene angeordnet sind, um einen rechteckigen LED-Rahmen auszubilden.

9. Rücklichtvorrichtung nach Anspruch 8, wobei der rechteckige LED-Rahmen die elektronische Mini-LED-Matrix oder die elektronische Mikro-LED-Matrix umgibt.

10. Rücklichtvorrichtung nach Anspruch 9, wobei das elektronische Steuersystem (10) konfiguriert ist zum:
Empfangen an dem Eingang eines Steuersignals, das einen Nebelzustand oder einen Regenzustand angibt,
Steuern der LED-Lichtvorrichtung (3), um entlang des Außenrahmens ein homogenes Signallicht zu erzeugen, das eine erste Lichtintensität aufweist,
Steuern der Anzeigevorrichtung (4), um in dem Bereich, der durch den Außenrahmen begrenzt ist, ein Bild zu erzeugen, das eine zweite Lichtintensität aufweist, die geringer als die erste Lichtintensität ist.

11. Rennwagen, der mit einer Rücklichtvorrichtung nach einem der Ansprüche 1 bis 10 versehen ist.

## Revendications

1. Dispositif de feu arrière (1) (100) destiné à une voiture de course (2) comprenant :
un dispositif de feu à DEL (3) comprenant une structure d'éclairage à DEL pourvue de multiples DEL (3a), et
un dispositif d'affichage (4) qui est constitué d'une matrice électronique de mini-DEL (5) ou d'une matrice électronique de micro-DEL, et est agencé dans une position adjacente aux DEL (3a) dudit dispositif de feu à DEL (3),
un système de commande électronique (10) configuré pour commander sélectivement :
ledit dispositif de feu à DEL (3) pour émettre, par lesdites DEL (3a) un signal lumineux pour signaler la présence de ladite voiture (2) aux pilotes d'autres voitures de course, et/ou
- ledit dispositif d'affichage (4) pour afficher au moins une image, le dispositif de feu arrière comprenant :
un corps de logement (16)
un corps lenticulaire (18) qui est accouplé au corps de logement (16)
une carte électronique (19) qui est agencée à l'intérieur dudit corps de logement (16),
ladite matrice électronique de mini-DEL (5) ou ladite matrice électronique de micro-DEL étant agencée sur ladite carte électronique (19) faisant face vers ledit corps lenticulaire (18)
dans lequel les DEL (3a) de ladite structure d'éclairage à DEL sont agencées sur ladite carte électronique (19) afin d'entourer de façon externe ladite matrice électronique de mini-DEL ou ladite matrice électronique de micro-DEL,
**caractérisé en ce que,** les DEL (3a) de ladite structure d'éclairage à DEL sont agencées sur une seconde surface de ladite carte électronique (19) opposée audit corps lenticulaire (18) et sont couplées optiquement à des plaques de guidage de lumière (23) structurées pour guider la lumière desdites DEL (3a) en direction dudit corps lenticulaire (18).

2. Dispositif de feu arrière selon la revendication 1, dans lequel ledit système de commande électronique (10) comprend un moyen de mémoire (10b) destiné à stocker une pluralité d'images, ledit système de commande électronique (10) étant configuré afin de :
recevoir en entrée un signal de commande associé à au moins une image à afficher par l'intermédiaire dudit dispositif de feu arrière,
rechercher une image parmi les images stockées dans ledit moyen de mémoire (10b) en fonction dudit signal de commande,
commander le dispositif d'affichage (4) afin d'afficher ladite image.

3. Dispositif de feu arrière selon la revendication 1 ou 2, dans lequel ledit système de commande électronique (10) est également configuré afin de commander les mini-DEL (7) et/ou les micro-DEL de la matrice électronique dudit dispositif d'affichage (4) pour générer une image contenant au moins : un message et/ou un symbole et/ou un pictogramme.

4. Dispositif de feu arrière selon l'une quelconque des revendications précédentes, dans lequel ledit système de commande électronique (10) est également configuré afin de commander les mini-DEL (7) et/ou les micro-DEL de la matrice électronique dudit dispositif d'affichage (4) pour afficher une image indiquant une condition de course.

5. Dispositif de feu arrière selon l'une quelconque des revendications précédentes, dans lequel ledit système de commande électronique est également configuré afin de commander les mini-DEL et/ou les micro-DEL de la matrice électronique dudit dispositif d'affichage (4) pour afficher une image indiquant une condition dangereuse.

6. Dispositif de feu arrière selon l'une quelconque des revendications précédentes, dans lequel ledit système de commande électronique est également configuré de façon à commander les mini-DEL (7) et/ou les micro-DEL de la matrice électronique du dispositif d'affichage (4) pour afficher une troisième image indiquant une condition de course de ladite voiture de course (2) pendant la course.

7. Dispositif de feu arrière selon l'une quelconque des revendications précédentes, dans lequel ladite matrice électronique de mini-DEL (5) et/ou ladite matrice électronique de micro-DEL de l'affichage à mini-DEL (4) a une forme rectangulaire plate.

8. Dispositif de feu arrière selon l'une quelconque des revendications précédentes, dans lequel les DEL (3a) dudit dispositif de feu à DEL (3) sont agencées côte à côte sur un plan de façon à former un cadre rectangulaire de DEL.

9. Dispositif de feu arrière selon la revendication 8, dans lequel ledit cadre rectangulaire de DEL entoure ladite matrice électronique de mini-DEL ou ladite matrice électronique de micro-DEL.

10. Dispositif de feu arrière selon la revendication 9, dans lequel ledit système de commande électronique (10) est configuré afin de :
recevoir en entrée un signal de commande indiquant une condition de brouillard ou une condition de pluie,
commander le dispositif de feu à DEL (3) afin de générer le long dudit cadre externe un signal lumineux homogène ayant une première intensité de lumière,
commander le dispositif d'affichage (4) afin de générer dans la zone délimitée par ledit cadre externe, une image ayant une seconde intensité de lumière qui est inférieure à la première intensité de lumière.

11. Voiture de course pourvue d'un dispositif de feu arrière fabriqué selon l'une quelconque des revendications 1 à 10.
